# EUROPEAN PATENT SPECIFICATION

(11) **EP 3 838 574 B1**
(45) Date of publication and mention of the grant of the patent: **26.07.2023**
(21) Application number: 20214378.0
(22) Date of filing: 15.12.2020
(51) Int. Cl.: B29D 30/24

(54) **TIRE BUILDING DRUM AND METHOD OF BUILDING A TIRE**
REIFENAUFBAUTROMMEL UND VERFAHREN ZUM AUFBAUEN EINES REIFENS
TAMBOUR DE CONSTRUCTION DE PNEU ET PROCÉDÉ DE FABRICATION DE PNEU

(30) Priority: 20.12.2019 US 201962951553 P; 20.12.2019 US 201962951635 P; 18.11.2020 US 202016950991
(43) Date of publication of application: 23.06.2021
(73) Proprietor: The Goodyear Tire & Rubber Company, Akron, OH 44316 (US)
(72) Inventor: STOILA, George Michael, Tallmadge, OH 44278 (US); HOGAN, Michael James, Tallmadge, OH 44278 (US); PHILLIPS, Joshua David, Uniontown, OH 44685 (US)
(74) Representative: Kutsch, Bernd

(56) References cited:
- EP-A1- 0 004 715
- DE-B- 1 126 130
- US-A- 2 488 863
- US-A- 3 948 717
- US-A1- 2003 168 144

## Description

### Field of the Invention

The invention relates to a tire drum, and a method of building a tire.

### Background of the Invention

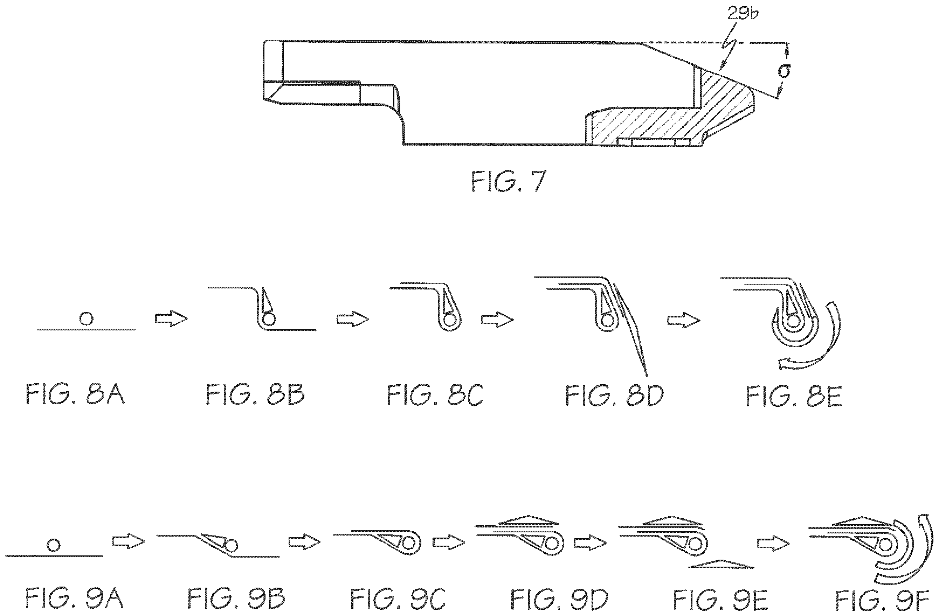

Current tire building drums typically are cylindrical surfaces useful for the application of various tire components such as plies. FIG. 8 illustrates the conventional tire building process, wherein a tire building drum capable of crowning is used. As shown FIG. 8B, the beads are locked, the drum is expanded radially outward, and the apex is applied so that the tip is located radially outward of the bead. As shown in FIG. 8C, the ply is then turned up around the bead and apex, and then additional components such as a down ply, a second apex and/or chafer is then applied (FIG. 8D). As shown in FIG. 8E, the entire assembly is then turned down (rotated clockwise) on a different station. After application of several tire components of varying thicknesses to the drum, this may result in an uneven surface. The uneven surface may produce undesired results, such as wrinkling of the tire components during the build process.

Thus, an improved tire building drum and method of making a tire is desired which eliminates the wrinkling of tire components.

US 2003/0168144 A1, EP 0 004 715 A1 and US 3,948,717 each show a tire building drum having a radially expandable center section having sloped shoulder ends.

US 2,488,863 discloses a method and a drum for building pneumatic tires including the application of a carcass down ply.

### Summary of the Invention

The invention relates to a tire building drum in accordance with claim 1 and to a method of building a tire in accordance with claim 9.

Dependent claims refer to preferred embodiments of the invention.

### Definitions

For ease of understanding this disclosure, the following items are defined:
"Apex" means an elastomeric filler located radially above the bead and interposed between the plies and the ply turn-up.

"Axial" and "axially" means the lines or directions that are parallel or aligned with the longitudinal axis of rotation of the tire building drum.

"Bead" means that part of the tire comprising an annular tensile member commonly referred to as a "bead core" wrapped by ply cords and shaped, with or without other reinforcement elements such as flippers, chippers, apexes, toe guards and chafers, to fit the design rim.

"Chafers" refers to narrow strips of material placed around the outside of the bead to protect cord plies from the rim, distribute flexing above the rim, and to seal the tire.

"Circumferential" means lines or directions extending along the perimeter of the surface of the annular tread perpendicular to the axial direction.

"Equatorial Plane (EP)" means the plane perpendicular to the tire's axis of rotation and passing through the center of its tread.

"Innerliner" means the layer or layers of elastomer or other material that form the inside surface of a tubeless tire and that contain the inflating fluid within the tire.

"Ply" means a continuous layer of rubber-coated parallel cords.

"Radial" and "radially" mean directions radially toward or away from the axis of rotation of the tire building drum.

### Brief Description of the Drawings

The invention will be described by way of example and with reference to the accompanying drawings in which:
FIG. 1 is a front view of a tire building drum of the present invention;
FIG. 2 is a perspective view of a tire building drum of the present invention;
FIG. 3A is a side cross-sectional view of a tire building drum of the present invention, while FIG. 3B is a close up view of detail B of FIG. 3A;
FIG. 4 is a side cross-sectional view of a tire building drum of the present invention shown with tire building components thereon;
FIG. 5 is a close up view of one end of the tire building drum of FIG. 4 illustrating the placement of the bead, apex, ply and down ply;
FIG. 6A is a perspective view of the left-hand side center sleeve component, while Fig. 6B is a top view of the left-hand side center sleeve component;
FIG. 7 is a side view of the sleeve component;
FIGS. 8A-8E illustrate a method of forming a tire; and
FIGS. 9A-9F illustrate a method of forming a tire using the tire building drum of the present invention.

### Detailed Description of Example Embodiments of the Invention

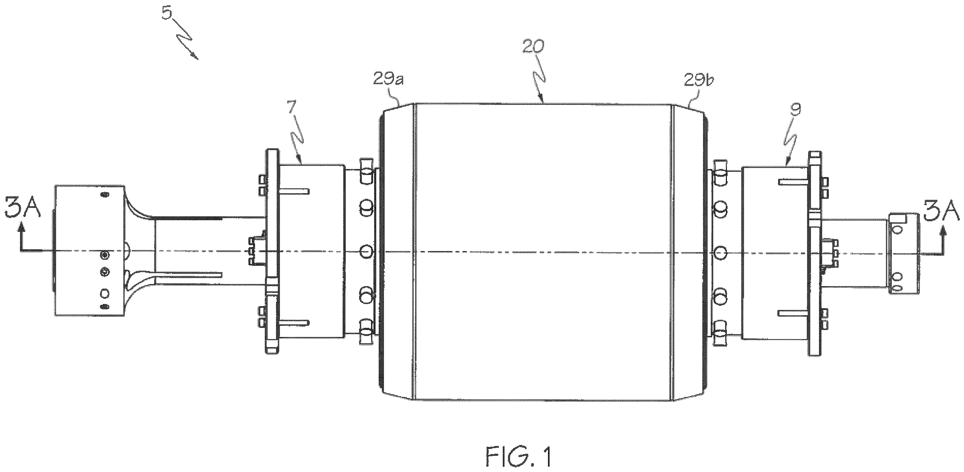

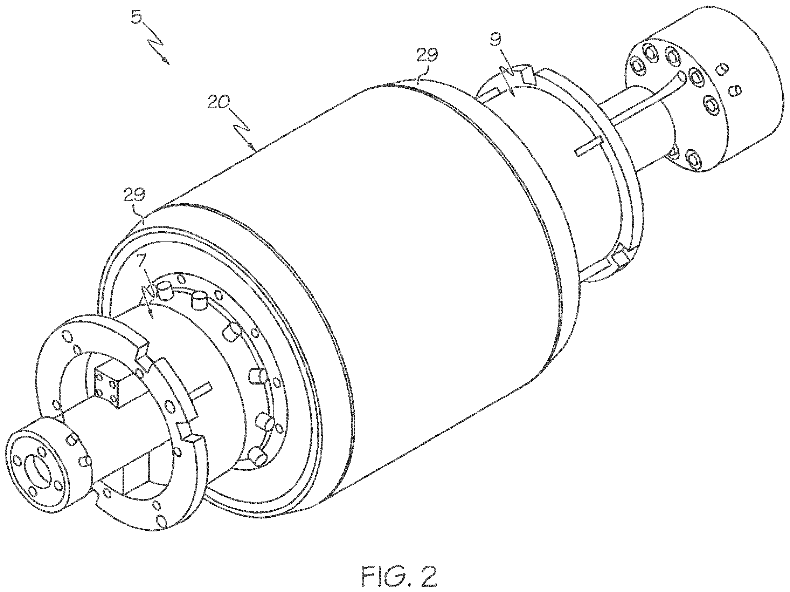

With reference to FIGS. 1 through 2, an exemplary tire building drum 5 of the present invention is illustrated. The tire building drum 5 of the present invention solves the problem of an uneven application surface during the tire building stage caused by the application of various tire components. The uneven surface may result in the wrinkling of tire components due to the uneven surface. The tire building drum 5 solves this problem by providing sloped segments which create a pocket for the varying thicknesses of the tire components to create an even or "flat" surface for the application of the down ply. The sloped segments are described in more detail, below.

The tire building drum 5 of the present invention is a full stage drum that can articulate from a fully collapsed position (not shown) to a radially expanded and axially contracted position. As shown more particularly in FIG. 1, the tire building drum 5 has a left-hand side 7 and a right-hand side 9 joined together by a center section 20.

The tire building drum includes a central drive shaft 120 that is provided for rotational movement of the tire building drum 5 about its longitudinal axis. The central shaft 120 is connected to a drive means (not shown). Provided within the central drive shaft 120 is a central screw 121. The central screw 121 is supported at each end by bearings 123. The threads on one side of the central screw 121 are left-handed and on the opposite side are right-handed. On the left-hand side is an inboard nut 125 connected to the one end of the threaded screw 121 and similarly on the opposite right-hand side is an outboard ball nut 125 connected to the central screw 121.

The left shoulder section 7 and right-hand shoulder section 9 of the tire building drum are each axially slidable on respective bearing sleeves 8, 10. The shoulder sections 7, 9 are actuated by the central drive screw 121. Rotation of the central drive screw 121 moves the drive pins mounted on nuts 130, which ride along the central drive screw 121. When the central screw is rotated, the nuts 130 move axially inward/outward, causing the drive pins and each shoulder section to move axially inward/outward in corresponding fashion. In addition, the drive pins are also in mechanical cooperation with the split center segments, causing split center segments 22a, 22b to axially extend or contract.

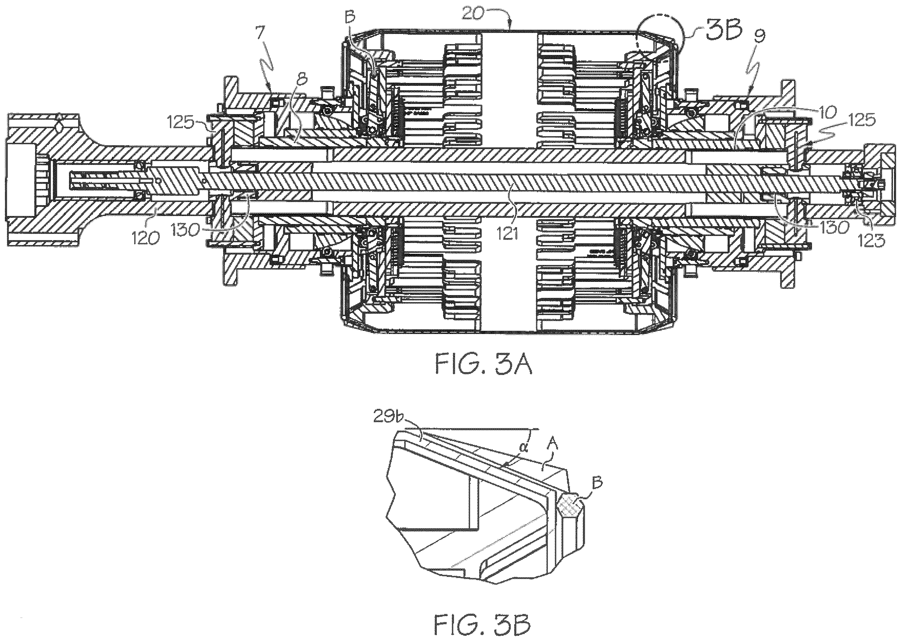

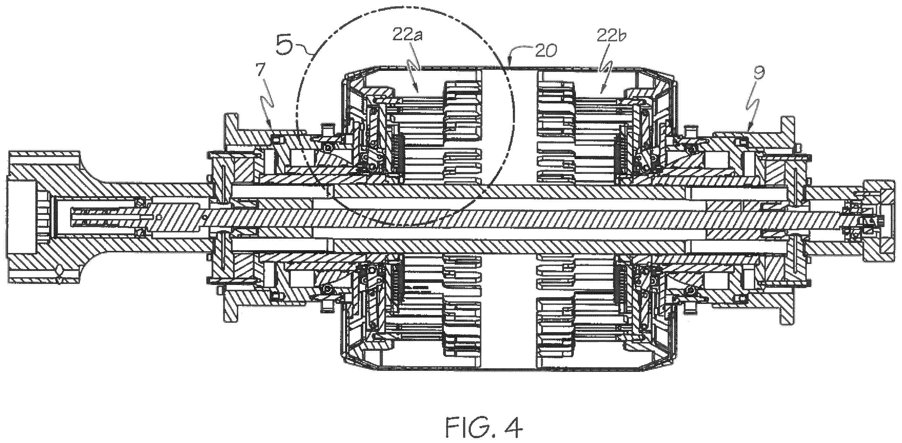

The center section 20 of the tire building drum as shown in Figs. 3A and 4, comprises a plurality of sloped center segments 22a on the left side of the center section and a plurality of sloped center segments 22b located on the right side of the drum 5. The sloped center segments 22a, 22b each have an angled outer surface 29a, 29b located at the center section shoulders. The angled outer surface 29a, 29b is angled at an angle α in the range of from 15 to 45 degrees, more preferably in the range of from 15 to 30 degrees. FIG. 3A and 3B illustrate the application of a tire bead B and an apex A. The angled outer surfaces create a pocket for the apex, ply and inner liner components so that a flat application surface is created for the application of a down ply. This solves the problem of the down ply wrinkling, or the problem of too much material such as the toeguard between the ply and down ply ending.

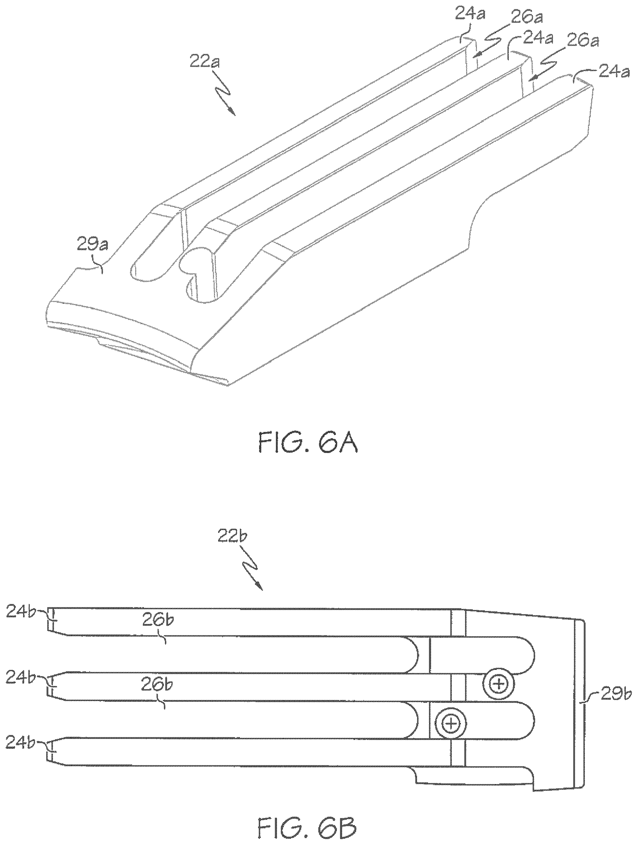

As shown in FIG. 6A, the left-hand side center segment 22a has one or more finger like projections 24a, with recesses 26a. As shown in FIG. 6B, the right-hand center segment 22b has three finger-like projections 24b with recesses 26b between the finger like projections 24b. The finger projections 24b of the right-hand center segments are slidably received in the opposed elongate slots 26b of the left-hand center segments so that the finger projections cooperate with the opposing slots in an interdigitated or interlocked manner. Likewise, the three fingers like projections 24b are slidably received in three opposed elongate slots 26a. The center segments 22a, 22b thus cooperate with each other to allow the center section 20 to axially expand or contract due to the opposing fingers sliding within the opposing aligned recesses.

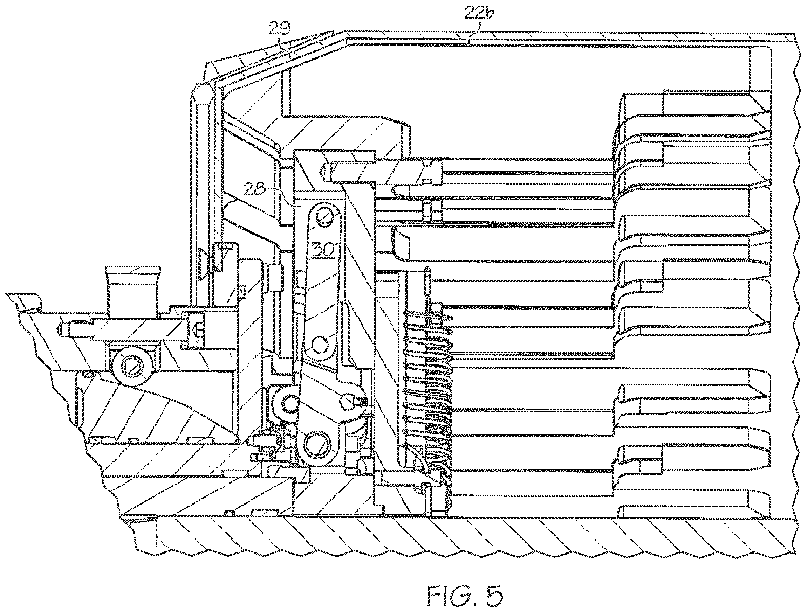

The center section 20 may also radially expand as shown in FIGS. 3-5. The center section 20 can radially expand in the range of from 20 mm to 50 mm. As each center segment 22a, 22b radially expands, the gap between the center segments increases. As best shown in FIG. 5, provided within each center segment half 22a, 22b is a radially oriented piston chamber 28. Received in each chamber 28 is a linkage 30 connected to a common actuator (not shown), such as a piston. When the linkages 30 are actuated, the linkages push the center segments 22a, 22b radially outward into the high crown position as shown in FIG. 5.

Adjacent the center section 20 are first and second bead locking mechanisms which are also radially expandable for engagement into the beads. With the drum of the present invention, the bead locking mechanism is independent of the drum crowning. After the carcass is made and the beads are locked, then the drum is crowned to reveal the specialized pocket for the apex to hide in, thereby allowing a flat surface for the down ply.

An upper bladder extends axially outward from the bead lock mechanism to the respective ends of the tire building drum. The upper bladder extends over a lower bladder, which is mounted in the shoulder area of the drum and extends axially outward to the respective ends of the tire building drum. The upper and lower bladders function as turnup bladders which are used to inflate and, thereby, make the turn-up ends of the ply wrap about the apex and bead cores.

FIGS. 9A-9F illustrated the new and improved tire building process using the drum of the present invention. The drum of the present invention eliminates the need for the extra step of turning down the entire assembly on a different station. The drum of the present invention produces a simplified turn down with no wrinkling of tire components. As shown in FIG. 9A, the beads are applied to the tire building drum surface. As shown in FIG. 9B, the center section of the drum is crowned using a much lower radial expansion (about 33 mm or 1.3 inches) the radial expansion of a high crown drum (about 51 mm or 2 inches or more). Next, the apex or bead and apex combination is applied to each sloped shoulder 29a, 29b of the drum of the present invention as shown in FIG. 9B. Next as shown in FIG. 9C, the ply is turned up over the bead and apex as shown, forming a flat surface to apply the additional tire components such as a down ply and a second apex. As shown in FIG. 9D, a down ply that has been stretched is then applied, an optional second apex and/or chafer may additionally be applied. As shown in FIG. 9E, the bead lock is released, and a chafer is applied under the bead. As shown in FIG. 9F, the bead is locked, and the chafer is turnup up over the bead.

## Claims

1. A tire building drum comprising a rotatable drum (5) having a center section (20) and a first and second shoulder section, wherein the center section (20) is radially expandable in a range of from 20 mm to 50 mm and has a first and second shoulder (29a, 29b), the first and the second shoulder being sloped, and wherein the first and second sloped shoulders each create a pocket for apex, ply and inner liner components such that, after applying an inner liner and a layer of ply to the drum (5) and then a bead, locking the bead into position, applying an apex to each of the sloped shoulders (29a, 29b) and turning up the ply over the bead and the apex, a flat application surface is created for the application of a down ply.

2. The tire building drum of claim 1 wherein the first and second shoulders (29a, 29b) are sloped at an angle (α) in the range of from 10 to 45 degrees.

3. The tire building drum of claim 1 wherein the first and second shoulders (29a, 29b) are sloped at an angle (α) in the range of from 15 to 30 degrees.

4. The tire building drum of at least one of the previous claims wherein the center section (20) comprises a first half and a second half (22a, 22b), wherein the first half and the second half are axially movable with respect to each other so that the center section (20) has an adjustable width.

5. The tire building drum of at least one of the previous claims wherein the center section (20) segments comprises a first half and a second half (22a, 22b), wherein the first half is slidably mounted within the second half.

6. The tire building drum of claim 1, 2 or 3 wherein the center section (20) comprises a first half and a second half (22a, 22b) and wherein the first half is interlocked with respect to the second half.

7. The tire building drum of at least one of the previous claims wherein the first shoulder (29a) is located at the radially and axially outermost left or right edge of the drum (5) and that the second shoulder (29b) is located at the respective radially and axially outermost right or left edge of the drum (5).

8. The tire building drum of at least one of the previous claims wherein the first shoulder (29a) is located at the radially and axially outermost edge of the first half (22a) of the center section (20) and that the second shoulder (29b) is located at the radially and axially outermost edge of the second half (22b) of the center section.

9. A method of building a tire, the method comprising the steps of:
providing a tire building drum (5) having a center section (20) with shoulders (29a, 29b) having sloped ends providing angled outer surfaces creating a pocket for apex, ply and inner liner components;
applying an inner liner and a layer of ply to the drum (5) and then a bead;
locking the bead into position;
applying an apex to each of the sloped shoulders (29a, 29b);
turning up the ply over the bead and the apex so that a flat application surface is created for the application of a down ply;
and then applying the down ply over the ply ending.

10. The method of building a tire of claim 9 wherein the first and second shoulders (29a, 29b) are sloped at an angle (α) in the range of from 10 to 45 degrees or in the range of from 15 to 30 degrees.

11. The method of building a tire in accordance with at least one of the claims 9 or 10 wherein the center section (20) comprises a first half and a second half (22a, 22b), wherein the first half and the second half are axially movable with respect to each other so that the center section (20) has an adjustable width.

12. The method of building a tire in accordance with at least one of the claims 9 or 10 wherein the center section (20) segments comprises a first half and a second half (22a, 22b), wherein the first half is slidably mounted within the second half.

13. The method of building a tire in accordance with at least one of the claims 9 or 10 wherein the center section (20) comprises a first half and a second half (22a, 22b) and wherein the first half is interlocked with respect to the second half.

14. The method of building a tire in accordance with at least one of the previous claims further comprising the step of unlocking the bead lock mechanism and then applying a chafer under the bead.

15. The method of building a tire in accordance with at least one of the previous claims further comprising the step of locking the bead and then turning up the chafer over the bead.

## Patentansprüche

1. Reifenbautrommel umfassend eine drehbare Trommel (5), die einen Mittelabschnitt (20) und einen ersten und zweiten Schulterabschnitt hat, wobei der Mittelabschnitt (20) in einem Bereich von 20 mm bis 50 mm radial dehnbar ist, und eine erste und zweite Schulter (29a, 29b) aufweist, wobei die erste und die zweite Schulter geneigt sind, und wobei die erste und die zweite geneigte Schulter jeweils eine Tasche für Kernprofil-, Lage- und Innenschichtkomponenten bilden, sodass, nach dem Auftragen einer Innenschicht und einer Lageschicht auf die Trommel (5) und dann eines Wulsts, der Verriegelung des Wulstes in Position, dem Auftragen eines Kernprofils auf jede der geneigten Schultern (29a, 29b) und dem nach oben Drehen der Lage über den Wulst und das Kernprofil, eine flache Auftragsfläche für die Anwendung einer nach unten gerichteten Lage entsteht.

2. Reifenbautrommel nach Anspruch 1, wobei die erste und die zweite Schulter (29a, 29b) unter einem Winkel (a) im Bereich von 10 bis 45 Grad geneigt sind.

3. Reifenbautrommel nach Anspruch 1, wobei die erste und die zweite Schulter (29a, 29b) unter einem Winkel (a) im Bereich von 15 bis 30 Grad geneigt sind.

4. Reifenbautrommel nach mindestens einem der vorhergehenden Ansprüche, wobei der Mittelabschnitt (20) eine erste Hälfte und eine zweite Hälfte (22a, 22b) umfasst, wobei die erste Hälfte und die zweite Hälfte axial zueinander beweglich sind, sodass der Mittelabschnitt (20) eine einstellbare Breite hat.

5. Reifenbautrommel nach mindestens einem der vorhergehenden Ansprüche, wobei der Mittelabschnitt (20) eine erste Hälfte und eine zweite Hälfte (22a, 22b) umfasst, wobei die erste Hälfte innerhalb der zweiten Hälfte verschiebbar gelagert ist.

6. Reifenbautrommel nach Anspruch 1, 2 oder 3, wobei der Mittelabschnitt (20) eine erste Hälfte und eine zweite Hälfte (22a, 22b) umfasst, und wobei die erste Hälfte gegenüber der zweiten Hälfte verriegelt ist.

7. Reifenbautrommel nach mindestens einem der vorhergehenden Ansprüche, wobei die erste Schulter (29a) am radial und axial äußersten linken oder rechten Rand der Trommel (5) angeordnet ist, und wobei die zweite Schulter (29b) am jeweils radial und axial äußersten rechten oder linken Rand der Trommel (5) angeordnet ist.

8. Reifenaufbautrommel nach mindestens einem der vorhergehenden Ansprüche, wobei die erste Schulter (29a) am radial und axial äußersten Rand der ersten Hälfte (22a) des Mittelabschnitts (20) angeordnet ist und wobei die zweite Schulter (29b) am radial und axial äußersten Rand der zweiten Hälfte (22b) des Mittelabschnitts angeordnet ist.

9. Verfahren zum Aufbau eines Reifens, wobei das Verfahren die folgenden Schritte umfasst:
die Bereitstellung einer Reifenbautrommel (5), die einen Mittelabschnitt (20) mit Schultern (29a, 29b) hat, die geneigte Enden haben, die abgewinkelte Außenflächen bereitstellen, die eine Tasche für Kernprofil-, Lage- und Innenschichtkomponenten bilden;
das Aufbringen einer Innenschicht und einer Lageschicht auf die Trommel (5) und anschließend eines Wulstes;
die Verriegelung des Wulstes in Position;
das Anbringen eines Kernprofils an jeder der geneigten Schultern (29a, 29b);
das nach oben Drehen der Lage über den Wulst und das Kernprofil, so dass eine ebene Auftragsfläche für die Aufbringung einer nach unten gerichteten Lage entsteht;
und dann das Auftragen der nach unten gerichteten Lage über das Lagenende.

10. Verfahren zum Aufbau eines Reifens nach Anspruch 9, wobei die erste und die zweite Schulter (29a, 29b) unter einem Winkel (a) im Bereich von 10 bis 45 Grad oder im Bereich von 15 bis 30 Grad geneigt sind.

11. Verfahren zum Aufbau eines Reifens nach mindestens einem der Ansprüche 9 oder 10, wobei der Mittelabschnitt (20) eine erste Hälfte und eine zweite Hälfte (22a, 22b) umfasst, wobei die erste Hälfte und die zweite Hälfte axial zueinander beweglich sind, so dass der Mittelabschnitt (20) eine einstellbare Breite hat.

12. Verfahren zum Aufbau eines Reifens nach mindestens einem der Ansprüche 9 oder 10, wobei der Mittelabschnitt (20) eine erste Hälfte und eine zweite Hälfte (22a, 22b) umfasst, wobei die erste Hälfte innerhalb der zweiten Hälfte verschiebbar gelagert ist.

13. Verfahren zum Aufbau eines Reifens nach mindestens einem der Ansprüche 9 oder 10, wobei der Mittelabschnitt (20) eine erste Hälfte und eine zweite Hälfte (22a, 22b) umfasst und wobei die erste Hälfte gegenüber der zweiten Hälfte verriegelt ist.

14. Verfahren zum Aufbau eines Reifens gemäß mindestens einem der vorhergehenden Ansprüche, das ferner den Schritt des Entriegelns des Wulstverriegelungsmechanismus und des anschließenden Auftragens eines Wulststreifens unter dem Wulst umfasst.

15. Verfahren zum Aufbau eines Reifens gemäß mindestens einem der vorhergehenden Ansprüche, das ferner den Schritt der Verriegelung des Wulstes und des anschließenden nach oben Drehen des Wulststreifens über dem Wulst umfasst.

## Revendications

1. Tambour de confection d'un bandage pneumatique, qui comprend un tambour rotatif (5) qui possède un tronçon central (20) et un premier et un deuxième tronçon faisant office d'épaulements ; dans lequel le tronçon central (20) possède une extensibilité en direction radiale dans une plage de 20 mm à 50 mm et possède un premier et un deuxième épaulement (29a, 29b), le premier et le deuxième épaulement étant inclinés ; et dans lequel premier et le deuxième épaulement inclinés créent chacun une poche pour des composants faisant office de bourrage sur tringle, de nappe et de calandrage intérieur, d'une manière telle que, après l'application d'un calandrage intérieur et d'une couche de nappe sur le tambour (5) et ensuite d'un talon, le verrouillage du talon en position, l'application d'un bourrage sur tringle sur chacun des épaulements inclinés (29a, 29b) et le retournement vers le haut de la nappe par-dessus le talon et le bourrage sur tringle, on obtient une surface d'application de forme plate pour l'application d'une nappe orientée vers le bas.

2. Tambour de confection d'un bandage pneumatique selon la revendication 1, dans lequel le premier et le deuxième épaulement (29a, 29b) sont inclinés en formant un angle (α) qui se situe dans la plage allant de 10 à 45°.

3. Tambour de confection d'un bandage pneumatique selon la revendication 1, dans lequel le premier et le deuxième épaulement (29a, 29b) sont inclinés en formant un angle (α) qui se situe dans la plage allant de 15 à 30°.

4. Tambour de confection d'un bandage pneumatique selon au moins une des revendications précédentes, dans lequel le tronçon central (20) comprend une première moitié et une deuxième moitié (22a, 22b) ; dans lequel la première moitié et la deuxième moitié sont mobiles dans la direction axiale l'une par rapport à l'autre, d'une manière telle que le tronçon central (20) possède une largeur qui peut être réglée.

5. Tambour de confection d'un bandage pneumatique selon au moins une des revendications précédentes, dans lequel le tronçon central (20) comprend une première moitié et une deuxième moitié (22a, 22b) ; dans lequel la première moitié est montée en coulissement au sein de la deuxième moitié.

6. Tambour de confection d'un bandage pneumatique selon la revendication 1, 2 ou 3, dans lequel le tronçon central (20) comprend une première moitié et une deuxième moitié (22a, 22b) ; et dans lequel la première moitié est verrouillée de manière réciproque par rapport à la deuxième moitié.

7. Tambour de confection d'un bandage pneumatique selon au moins une des revendications précédentes, dans lequel le premier épaulement (29a) est disposé sur le bord gauche ou droit du tambour (5), le plus externe dans la direction radiale et dans la direction axiale ; et dans lequel le deuxième épaulement (29b) est disposé sur le bord gauche ou droit respectif du tambour (5), le plus externe dans la direction radiale et dans la direction axiale.

8. Tambour de confection d'un bandage pneumatique selon au moins une des revendications précédentes, dans lequel le premier épaulement (29a) est disposé sur le bord le plus externe dans la direction radiale et dans la direction axiale de la première moitié (22a) du tronçon central (20) ; et dans lequel le deuxième épaulement (29b) est disposé sur le bord le plus externe dans la direction radiale et dans la direction axiale de la deuxième moitié (22b) du tronçon central (20).

9. Procédé de confection d'un bandage pneumatique, le procédé comprenant les étapes dans lesquelles :
on procure un tambour de confection d'un bandage pneumatique (5) qui possède un tronçon central (20) qui comprend des épaulements (29a, 29b) possédant des extrémités inclinées qui procurent des surfaces externes angulaires qui créent une poche pour des composants faisant office de bourrage sur tringle, de nappe et de calandrage intérieur ;
on applique un calandrage intérieur et une couche de nappe sur le tambour (5), et ensuite un talon ;
on verrouille le talon en position ;
on applique un bourrage sur tringle sur chacun des épaulements inclinés (29a, 29b) ;
on procède à un retournement vers le haut de la nappe par-dessus le talon et par-dessus le bourrage sur tringle, d'une manière telle que l'on obtient une surface d'application de forme plate pour l'application d'une nappe orientée vers le bas ;
et on applique ensuite la nappe orientée vers le bas par-dessus l'extrémité de nappe.

10. Procédé de confection d'un bandage pneumatique selon la revendication 9, dans lequel le premier et le deuxième épaulement (29a, 29b) sont inclinés en formant un angle (α) qui se situe dans la plage allant de 10 à 45° ou dans la plage allant de 15 à 30°.

11. Procédé de confection d'un bandage pneumatique selon au moins une des revendications 9 ou 10, dans lequel le tronçon central (20) comprend une première moitié et une deuxième moitié (22a, 22b), dans lequel la première moitié et la deuxième moitié sont mobiles dans la direction axiale l'une par rapport à l'autre, d'une manière telle que le tronçon central (20) possède une largeur qui peut être réglée.

12. Procédé de confection d'un bandage pneumatique selon au moins une des revendications 9 ou 10, dans lequel le tronçon central (20) comprend une première moitié et une deuxième moitié (22a, 22b) ; dans lequel la première moitié est montée en coulissement au sein de la deuxième moitié.

13. Procédé de confection d'un bandage pneumatique selon au moins une des revendications 9 ou 10, dans lequel le tronçon central (20) comprend une première moitié et une deuxième moitié (22a, 22b) ; et dans lequel la première moitié est verrouillée de manière réciproque par rapport à la deuxième moitié.

14. Procédé de confection d'un bandage pneumatique selon au moins une des revendications précédentes, qui comprend en outre l'étape dans laquelle on procède à un déverrouillage du mécanisme de verrouillage du talon et on applique ensuite une bandelette talon en dessous du talon.

15. Procédé de confection d'un bandage pneumatique selon au moins une des revendications précédentes, qui comprend en outre l'étape dans laquelle on procède à un verrouillage du talon et ensuite à un retournement vers le haut de la bandelette talon par-dessus le talon.
